# NEUE EUROPÄISCHE PATENTSCHRIFT

(11) **EP 1 567 591 B2**
(45) Veröffentlichungstag und Bekanntmachung des Hinweises auf die Entscheidung über den Einspruch: **21.10.2015**
(45) Hinweis auf die Patenterteilung: 20.07.2011
(21) Anmeldenummer: 03772334.3
(22) Anmeldetag: 13.11.2003
(51) Int. Cl.: C08L 77/00, C08K 3/04

(54) **SCHLAGZÄHMODIFIZIERTE POLYMER-ZUSAMMENSETZUNGEN**
POLYMER COMPOSITIONS WITH A MODIFIED IMPACT-RESISTANCE
COMPOSITIONS A BASE DE POLYMERES PRESENTANT UNE RESILIENCE MODIFIEE

(30) Priorität: 25.11.2002 DE 10254877; 06.12.2002 DE 10257077
(43) Veröffentlichungstag der Anmeldung: 31.08.2005
(73) Patentinhaber: STYROLUTION (JERSEY) LIMITED, Jersey JE4 9WG Channel Islands (GB)
(72) Erfinder: VATHAUER, Marc, 50858 Köln (DE); QUAAS, Gerwolf, 51061 Köln (DE); BRAIG, Thomas, Stanley, Hong kong (CN); JOACHIMI, Detlev, 47800 Krefeld (DE)
(74) Vertreter: Jacobi, Markus Alexander
(86) Internationale Anmeldenummer: PCT/EP2003/012692
(87) Internationale Veröffentlichungsnummer: WO 2004/048474

(56) Entgegenhaltungen:
- EP-A2- 0 355 512
- WO-A-01/90241
- WO-A-99/45069
- WO-A1-01/36536
- US-A- 5 756 576
- US-A1- 2002 099 136
- US-B1- 6 469 093

## Beschreibung

Die Erfindung betrifft schlagzähmodifizierte Polyamid-Zusammensetzungen und daraus hergestellte Formteile, die sich insbesondere zur direkten Online-Lackierung ohne vorherige Behandlung des Formteiles mit einem elektrisch leitfähigen Primersystemes eignen sowie die online lackierten Formteile.

DE-A 101 019 225 beschreibt allgemein Polymer-Zusammensetzungen enthaltend Polyamid, Pfropfpolymerisat, Vinyl(co)polymerisat, Verlräglichkeitsvermittler und feinstteilige mineralische Partikel mit anisotroper Partikelgeometrie. Die Zusammensetzung gemäß vorliegender Erfindung ist eine Auswahl im Hinblick auf diese Offenbarung. In DE-A 101 019 225 wird auch nicht erwähnt, dass die dort beschriebene Zusammensetzungen online lackiert werden können.

Aus der EP 0 202 214 A sind Polymerblends aus einem Polyamid, einem Styrol/AcryInitril-Copolymerisat und einem Verträglichkeitsvermittler bekannt. Als Verträglichkeitsvermitler wird ein Copolymer aus einem vinylaromatischen Monomer und Acrylnitril, Methacrylnitril, C₁ bis C₄-Alkylmethacrylat oder C₁ bis C₄-Alkylacrylat in einem Gewichtsverhältnis von 85:15 bis 15:85 eingesetzt. Durch den Einsatz von Verträglichkeitsvermitklern soll eine erhöhte Schlagzähigkeit erreicht werden. Nachteilig an den in dieser Druckschrift beschriebenen Polymerblends ist, dass sie für Dünnwandapplikationen eine zu geringe Steifigkeit und einen zu hohen Ausdehnungskoeffizienten aufweisen.

Aus JP 11 241 016.A2 sind Polyamid-Formmassen bekannt, die neben Polyamid kautschukmodifizierte Styrolpolymere, Pfropfpolymere auf Basis von Ethylen/Propylen-Kautschuken und Talk mit einem Teilchendurchmesser von 1 bis 4 µm enthalten.

EP-A 0 718 350 beschreibt Polymerblends aus einem kristallinen und einem amorphen bzw. halbkristallinen Polymer sowie 2 bis 7 Gew.-% elektrisch leitfähigem Kohlenstoff (Ruß) zur Herstellung geformter, thermoplastischer Gegenstände, die in einem weiteren Schritt elektrostatisch lackiert werden. Besonders hoch wärmeformbeständige Polymerblends mit leitfähiger Ausrüstung werden hier nicht beschrieben.

Im US-A 4 974 307 wird eine Methode beschrieben, eine Automobilkarosse aus Metall und Kunststoff herzustellen, die dann lackiert wird. Hierzu werden Formmassen und daraus hergestellte Formteile aus einem Polymerharz und einem leitfähigen Material beschrieben, deren Oberflächenwiderstände zwischen 5 x 10² und 1 x 10⁶ Ω x cm liegen. Um diese hohen Leitfähigkeiten zu erreichen, bedarf es einer hohen Additivierung mit Leitfähigkeitsadditiv, die einen negativen Einfluss auf Fließfähigkeit und Zähigkeit der entsprechenden Polymerformmasse hat.

Allgemein bekannt ist ferner der Einsatz von feinteiligen anorganischen Materialien in bestimmten Polymer-Zusammensetzungen, insbesondere in Polycarbonat-Zusammensetzungen. Die anorganischen Materialien werden in diesen Zusammensetzungen beispielsweise als Verstärkungsstoff zur Erhöhung der Steifigkeit und Zugfestigkeit, zur Erhöhung der Dimensionsstabilität bei Temperaturschwankungen, zur Verbesserung der Oberflächeneigenschaften oder - in flammwidrigen Materialien - auch als Flammschutzsynergist eingesetzt. Verwendet werden sowohl mineralische als auch künstlich gewonnene Materialien. So werden in der US-A 5 714 537 beispielsweise Polycarbonat-Blends beschrieben, die zur Verbesserung der Steifigkeit und linearen Wärmeausdehnungsfestigkeit bestimmte anorganische Füllstoffe enthalten.

Aus der EP 0 785 234 A1 sind kautschukmodifizierte Polymer-Zusammensetzungen bekannt, die als Verträglichkeitsvermittler ein Terpolymer aus Styrol, Acrylnitril und Maleinsäureanhydrid enthalten. Der Zusatz der Verträglichkeitsvermittler führt zu einer Verbesserung der mechanischen Eigenschaften, insbesondere der Schlagzähigkeit bei tiefen Temperaturen. Nachteilig ist jedoch, dass das Gesamteigenschaftsprofil des Polymers, insbesondere das Verarbeitungsverhalten beim Spritzguss unter der Zugabe des Verträglichkeitsvermittlers leidet.

Aus der WO 01/34703 sind schlagzähmodifizierte Polyethylenterephthalat/Polycarbonat Blends bekannt, die sich zur Online-Lackierung eignen. Polyamid-Blends werden nicht beschrieben.

Bekannt für einige direkt lackierbare online/inline-Anwendungen ist das Noryl® GTX der General Electric Plastics (vgl. EP-A 685 527). Es handelt sich dabei um ein Blend enthaltend Polyamid und Polyphenylenether (PA/PPO Blend).

Karosserieaußenteile aus Kunststoffen müssen in der Regel lackiert werden. Im Falle wagenfarbig eingefärbter Kunststoffe werden die daraus hergestellten Karosserieanbauteile in der Regel mit einer oder mehreren Schichten durchsichtiger Lacke überzogen. Im Falle nicht wagenfarbig eingefärbter Kunststoffe werden die daraus hergestellten -Karosserieanbauteile mit mehreren Lackschichten lackiert, wobei mindestens eine der Schichten farbgebend ist (Decklack). Je nach Wärmeformbeständigkeit der Kunststoffe wird hier zwischen unterschiedlichen. Verfahren unterschieden, die im Zeitpunkt der Anbringung der Kunststoffanbauteile an das Karosserieaußenteil differieren. Wenn die Kunststoffanbauteile den gesamten Lackierprozess mit durchlaufen, spricht man allgemein von einer "online" Lackierung, die die höchste Anforderung an die Wärmeformbeständigkeit des Kunststoffes stellt. Bei der sogenannten "inline" Lackierung wird das Kunststoffanbauteil nach der sogenannten Kathoden Tauch Lackierung (KTL) an das Karosserieaußenteil montiert und in die Lackierstraße eingebracht. Bei der sogenannten "off-line" Lackierung wird das gesamte Kunststoffanbauteil außerhalb der Lackierstraße bei geringen Temperaturen lackiert und erst anschließend an das Karosserieaußenteil montiert.

Der "online"-Prozess wird von der Automobilindustrie bevorzugt, da er die Arbeitsschritte minimiert und außerdem die beste Farbanpassung von Kunststoff und Blech erreicht wird. Bei diesem Verfahren werden Temperaturen von bis zu 205°C erreicht, so dass hohe Anforderungen an die Wärmeformbeständigkeit des Formteils gestellt werden.

Wenn es gelingt einen Kunststoff so zu modifizieren, dass sein spezifischer Widerstand so gering wird, dass er ohne vorherige Behandlung mit einem leitfähigen Primersystem in der elektrostatischen Lackierung verwendet werden kann, so umgeht man einen Produktionsschritt.

Zusätzliche Anforderungen, die an Karosserieanbauteile aus Kunststoff gestellt werden, sind gute Steifigkeit, geringe thermische Ausdehnung, gute Obertlächenqualität, gute Lackierbarkeit und gute Chemikalienbeständigkeit. Zudem müssen die zur Herstellung der Karosserieaußenteile verwendeten Formassen eine gute Fließfähigkeit in der Schmelze aufweisen.

Aufgabe der vorliegenden Erfindung war es, leitfähige Polyamidformmassen zur Verfügung zu stellen, die eine ausgezeichnete Wärmeformbeständigkeit und geringe thermische Ausdehnung aufweisen. Die erfindungsgemäßen Zusammensetzungen weisen zusätzlich eine erhöhte Zugfestigkeit bei gleichzeitig gutem Verarbeitungsverhalten auf.

Gegenstand der vorliegenden Erfindung sind daher Zusammensetzungen enthaltend Polyamid und 0,1 bis 8 Gew.-Teile elektrisch leitfähige Kohlenstoffpartikel sowie 0,5 bis 50 Gew.Teile Pfropfpolymerisat wie in Anspruch 1 beschrieben.

Die erfindungsgemäße Polymer-Zusammensetzung enthält
(A) 40 bis 90, vorzugsweise 45 bis 85, besonders bevorzugt 50 bis 80, insbesondere 55 bis 70 Gew.-Teile Polyamid
(B) 0,5 bis 50, vorzugsweise 1 bis 35, besonders bevorzugt 1 bis 30, insbesondere 5 bis 25 Gew.-Teile Pfropfpolymerisat, wobei es sich bei dem Propfpolymerisat um ein oder mehrere Pfropfpolymerisate aus wenigstens einem Vinylmonomeren auf mindestens eine Pfropfgrundlage mit einer Glasübergangstemperatur < 10 °C handelt, wobei die Pfropfgrundlage Polybutadien-Kautschuk ist,
(C) 0,1 bis 30, vorzugsweise 1 bis 20, besonders bevorzugt 1,5 bis 15, insbesondere 2,5 bis 13 Gew.-Teile mineralische Partikel
(D) 0,1 bis 8, vorzugsweise 1 bis 5, besonders bevorzugt 1,5 bis 4,5 Gew.-Teile elektrisch leitfähige Kohlenstoffpartikel.

Die Zusammensetzung kann als weitere Komponenten Verträglichkeitsvermittler (Komponente E) und/oder Vinyl(co)polymerisat (Komponente F) Polymeradditive wie Stabilisatoren, und Phenol-Formaldehyd-Harze (H) enthalten.

Gegenstand der Erfindung sind weiterhin auch die Online-lackierten Formteile erhältlich aus den obengenannten Zusammensetzungen.

Es wurde gefunden, dass ein Kunststoff mit obiger Zusammensetzung eine ausgezeichnete Wärmeformbeständigkeit zeigt und aufgrund dieser ein Einsatz in "online"-Lackierprozessen gut geeignet ist. Weiterhin weisen die erfindungsgemäßen Zusammensetzungen hohe Elastizitätsmodule sowie eine Class-A Oberfläche, hohe Steifigkeit und hervorragende Chemikalienresistenz auf.

Die erfindungsgemäß geeigneten Komponenten der Polymer-Zusammensetzung werden nachfolgend beispielhaft erläutert.

### Komponente A

Erfindungsgemäß geeignete Polyamide (Komponente A) sind bekannt oder nach literaturbekannten Verfahren herstellbar.

Erfindungsgemäß geeignete Polyamide sind bekannte Homopolyamide, Copolyamide und Mischungen dieser Polyamide. Es können dies teilkristalline und/oder amorphe Polyamide sein. Als teilkristalline Polyamide sind Polyamid-6, Polyamid-6,6, Mischungen und entsprechende Copolymerisate aus diesen Komponenten geeignet. Weiterhin kommen teilkristalline Polyamide in Betracht, deren Säurekomponente ganz oder teilweise aus Terephthalsäure und/oder Isophthalsäure und/oder Korksäure und/oder Sebacinsäure und/oder Azelainsäure und/oder Adipinsäure und/oder Cyclohexandicarbonsäure, deren Diaminkomponente ganz oder teilweise aus m- und/oder p-Xylylendiamin und/oder Hexamethylendiamin und/oder 2,2,4-Trimethylhexamethylendiamin und/oder 2,4,4-Trimethylhexamethylendiamin und/oder Isophorondiamin besteht und deren Zusammensetzung prinzipiell bekannt ist.

Außerdem sind Polyamide zu nennen, die ganz oder teilweise aus Lactamen mit 7 bis 12 Kohlenstoffatomen im Ring, gegebenenfalls unter Mitverwendung einer oder mehrerer der oben genannten Ausgangskomponenten, hergestellt werden.

Besonders bevorzugte teilkristalline Polyamide sind Polyamid-6 und Polyamid-6,6 und ihre Mischungen. Als amorphe Polyamide können bekannte Produkte eingesetzt werden. Sie werden erhalten durch Polykondensation von Diaminen wie Ethylendiamin, Hexamethylendiamin, Decamethylendiamin, 2,2,4- und/oder 2,4,4-Trimethylhexamethylendiamin, m- und/oder p-Xylylendiamin, Bis-(4-aminocyclohexyl)-methan, Bis-(4-aminocyclohexyl)-propan, 3,3'-Dimethyl-4,4'-diamino-dicyclohexylmethan, 3-Aminomethyl-3,5,5-trimethylcyclohexylamin, 2,5-, und/oder 2,6-Bis-(aminomethyl)-norbornan und/oder 1,4-Diaminomethylcyclohexan mit Dicarbonsäuren wie Oxalsäure, Adipinsäure, Azelainsäure, Decandicarbonsäure, Heptadecandicarbonsäure, 2,2,4- und/oder 2,4,4-Trimethyladipinsäure, Isophthalsäure und Terephthalsäure.

Auch Copolymere, die durch Polykondensation mehrerer Monomere erhalten werden, sind geeignet, ferner Copolymere, die unter Zusatz von Aminocarbonsäuren wie e-Aminocapronsäure, w-Aminoundecansäure oder w-Aminolaurinsäure oder ihren Lactamen, hergestellt werden.

Besonders geeignete amorphe Polyamide sind die Polyamide hergestellt aus Isophthalsäure, Hexamethylendiamin und weiteren Diaminen wie 4,4-Diaminodicyclohexylinethan, Isophorondiamin, 2,2,4- und/oder 2,4,4-Trimethylhexa-methylendiamin, 2,5- und/oder 2,6-Bis-(aminomethyl)-norbomen; oder aus Isophthalsäure, 4,4'-Diamino-dicyclohexylmethan und ε-Caprolactam; oder aus Isophthalsäure, 3,3'-Dimethyl-4,4'-diamino-dicyclohexylmethan und Laurinlactam; oder aus Terephthalsäure und dem Isomerengemisch aus 2,2,4- und/oder 2,4,4-Trimethylhexamethylendiamin.

Anstelle des reinen 4,4'-Diaminodicyclohexylmethans können auch Gemische der Stellungsisomeren Diamindicyclohexalmethane eingesetzt werden, die sich zusammensetzen aus

| | |
|---|---|
| 70 bis 99 mol% | des 4,4'-Diamino-lsomeren, |
| 1 bis 30 mol% | des 2,4'-Diamino-lsomeren und |
| 0 bis 2 mol-% | des 2,2'-Diamino-lsomeren, |

gegebenenfalls entsprechend höher kondensierten Diaminen, die durch Hydrierung von Diaminodiphenylmethan technischer Qualität erhalten werden. Die Isophthalsäure kann bis zu 30 % durch Terephthalsäure ersetzt sein.

Die Polyamide weisen vorzugsweise eine relative Viskosität (gemessen an einer 1 gew.-%igen Lösung in m-Kresol bei 25°C) von 2,0 bis 5,0, besonders bevorzugt von 2,5 bis 4,0 auf.

Die Polyamide können allein oder in beliebiger Mischung untereinander in Komponente A enthalten sein.

### Komponente B

Die Komponente B umfasst ein oder mehrere kautschukmodifizierte Pfropfpolymerisate wie in Anspruch 1 beschrieben. Das kautschukmodifizierte Pfropfpolymerisat B ist ein mit Vinylmonomeren, vorzugsweise gemäß B.1.1 und B.1.2 gepfropften Kautschuk B.2. Die Herstellung von B erfolgt in bekannter Weise durch radikalische Polymerisation, z.B. nach einem Emulsions-, Masse- oder Lösungs- oder Masse-Suspensions-Polymerisationsverfahren , wie z.B. in den US-A 3 243 481, US-A 3 509 237, US-A 3 660 535, US-A 4 221 833 und US-A 4 239 863 beschrieben. Besonders geeignete Pfropfkautschuke sind auch ABS-Polymerisate, die durch Redox-Initiierung mit einem Initiatorsystem aus organischem Hydroperoxid und Ascorbinsäure gemäß US-A 4 937 285 erhältlich sind.

Bevorzugt sind ein oder mehrere Pfropfpolymerisate von 5 bis 95, vorzugsweise 20 bis 90 Gew.-% wenigstens eines Vinylmonomeren B.1 auf 95 bis 5, vorzugsweise 80 bis 10 Gew.-% einer oder mehrerer Pfropfgrundlagen B.2 mit Glasübergangstemperaturen < 10°C, vorzugsweise <-10°C.

Bevorzugte Monomere B.1.1 sind Styrol, α-Methylstyrol, halogen- oder alkylkernsubstituierte Styrole wie p-Methylstyrol, p-Chlorstyrol, (Meth)acrylsäure-C₁-C₈-alkylester wie Methylmethacrylat, n-Butylacrylat und tert.-Butylacrylat. Bevorzugte Monomere B.1.2 sind ungesättigte Nitrile wie Acrylnitril, Methacrylnitril, (Meth)-Acrylsäure-C₁-C₈-alkylester wie Methylmethacrylat, n-Butylacrylat, tert.-Butylacrylat, Derivate (wie Anhydride und Imide) ungesättigter Carbonsäuren wie Maleinsäureanhydrid und N-Phenyl-maleinimid oder Mischungen davon.

Besonders bevorzugte Monomere B.1.1 sind Styrol, α-Methylstyrol und/oder Methylmethacrylat, besonders bevorzugte Monomere B.1.2 sind Acrylnitril, Maleinsäureanhydrid und/oder Methylinethacrylat.

Besonders bevorzugte Monomere sind B.1.1 Styrol und B.1.2 Acrylnitril.

Der Gelgehalt der Pfropfgrundlage B.2 wird bei 25°C in einem geeigneten Lösungsmittel bestimmt (M. Hoffmann, H. Krömer, R. Kuhn, Polymeranalytik I und II, Georg Thieme-Verlag, Stuttgart 1977).

Die mittlere Teilchengröße d₅₀ ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782-1796) bestimmt werden.

Die Komponente B kann, falls erforderlich und wenn dadurch die Kautschukeigenschaften der Komponente B.2 nicht beeinträchtigt werden, zusätzlich noch geringe Mengen, üblicherweise weniger als 5 Gew.-%, vorzugsweise weniger als 2 Gew.%, bezogen auf B.2, vernetzend wirkender ethylenisch ungesättigter Monomeren enthalten. Beispiele für solche vernetzend wirkenden Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen.und 2 bis 20 C-Atomen, mehrfach ungesättigte heterocyclische Verbindungen, polyfunktionelle Vinylverbindungen, wie Alkylendiol-di(meth)-acrylate, Polyester-di(meth)-acrylate, Divinylbenzol, Trivinylbenzol, Trivinylcyanurat, Triallylcyanurat, Allyl-(meth)-acrylat, Diallylmaleat, Diallylfumarat, Triallyphosphat und Diallylphthalat.

Bevorzugte vernetzende Monomere sind Allylmethacrylat, Ethylenglykoldimethacrylat, Diallylphthalat und heterocyclische Verbindungen, die mindestens drei ethylenisch ungesättigte Gruppen aufweisen.

Das kautschukmodifizierte Pfropfpolymerisat B wird im Falle der Herstellung mittels Masse-oder Lösungs- oder Masse-Suspensionspolymerisation erhalten durch Pfropfpolymerisation von 50 bis 99, bevorzugt 65 bis 98, besonders bevorzugt 75 bis 97 Gew.-Teilen eines Gemisches aus 50 bis 99, bevorzugt 60 bis 95 Gew.-Teilen Monomeren gemäß B.1.1 und 1 bis 50, bevorzugt 5 bis 40 Gew.-Teilen Monomeren gemäß B.1.2 in Gegenwart von 1 bis 50, vorzugsweise 2 bis 35, besonders bevorzugt 2 bis 15, insbesondere 2 bis 13 Gew.-Teilen der Kautschukkomponente B.2.

Der mittlere Teilchendurchmesser d₅₀ der gepfropften Kautschukteilchen weist im Allgemeinen Werte von 0,05 bis 10 µm, vorzugsweise 0,1 bis 5 µm, besonders bevorzugt 0,2 bis 1 µm auf.

Der mittlere Teilchendurchmesser d₅₀ der resultierenden gepfropften Kautschukteilchen, die mittels Masse- oder Lösungs- oder Masse-Suspensionspolymerisationsverfahren erhältlich sind, (ermittelt durch Auszählung an elektronenmikroskopischen Aufnahmen) liegt im Allgemeinen im Bereich von 0,5 bis 5 µm, vorzugsweise von 0,8 bis 2,5 µm.

Die Pfropfcopolymerisate können allein oder in beliebiger Mischung untereinander in Komponente B enthalten sein.

Komponente B ist in der erfindungsgemäßen Polymer-Zusammensetzung in einer Menge von 0,5 bis 50 Gew.-Teilen, besonders bevorzugt von 1 bis 35 Gew.-Teilen und ganz besonders bevorzugt von 5 bis 25 Gew.-Teilen enthalten.

### Komponenten C

Erfindungsgemäß geeignete mineralische Partikel sind anorganische Materialien mit schuppen- oder plättchenförmigem Charakter wie Talk, Glimmer/Tonschichtmineralien, Montmorrilonit, letztere auch in einer durch Ionenaustausch modifizierten, organophilen Form, weiterhin Kaolin und Vermiculit.

Besonders bevorzugt ist Talk. Unter Talk wird ein natürlich vorkommender oder synthetisch hergestellter Talk verstanden. Reiner Talk hat die chemische Zusammensetzung 3MgO·4SiO2·H₂O und somit einen MgO-Gehalt von 31,9 Gew.-%, einen SiO₂-Gehalt von 63,4 Gew.-% und einen Gehalt an chemisch gebundenem Wasser von 4,8 Gew.-%. Es handelt sich um ein Silikat mit Schichtstruktur.

Besonders bevorzugt sind Talktypen hoher Reinheit. Diese enthalten beispielsweise einen MgO-Gehalt von 28 bis 35 Gew.-%, bevorzugt 30 bis 33 Gew.-%, besonders bevorzugt 30,5 bis 32 Gew.-% und einen SiO₂-Gehalt von 55 bis 65 Gew.-%, bevorzugt 58 bis 64 Gew.-%, besonders bevorzugt 60 bis 62,5 Gew.-%. Bevorzugte Talktypen zeichnen sich des Weiteren durch einen Al₂O₃-Gehalt von < 5 Gew.-%, besonders bevorzugt von < 1 Gew.-%, insbesondere von < 0,7 Gew.-% aus.

Bevorzugte mineralische Partikel sind ferner auch solche mit anisotroper Partikelgeometrie. Darunter werden solche Teilchen verstanden, deren sogenanntes Aspekt-Verhältnis - Verhältnis aus größter und kleinster Partikelabmessung - größer als 1, vorzugsweise größer als 2 und besonders bevorzugt größer als etwa 5 ist. Solche Teilchen sind zumindest im weitesten Sinne plättchen- oder faserförmig. Zu solchen Materialien gehören beispielsweise bestimmte Talke und bestimmte (Alumino)Silicate mit Schicht oder Fasergeometrie wie Bentonit, Wollastonit, Glimmer (Mica), Kaolin, Hydrotalcit, Hektorit oder Montmorillonit.

Vorteilhaft ist insbesondere auch der Einsatz von Talk in Form von feinvermahlenen Typen mit einer mittleren Teilchengröße d₅₀ von < 10 µm, bevorzugt < 5 µm, besonders bevorzugt < 2,5 µm, ganz besonders bevorzugt ≤ 1,5 µm. Insbesondere bevorzugt ist der Einsatz von Talk mit einer mittleren Teilchengröße d₅₀ von 350 nm bis 1,5 µm.

Teilchengröße und Teilchendurchmesser im Sinne dieser Erfindung bedeutet den mittleren Teilchendurchmesser d₅₀, ermittelt durch Ultrazentrifugenmessungen nach W. Scholtan et al., Kolloid-Z. und Z. Polymere 250 (1972), S. 782-796.

Des Weiteren können die mineralischen Teilchen mit organischen Molekülen oberflächenmodifiziert, beispielsweise silanisiert, sein, um eine bessere Verträglichkeit mit den Polymeren zu erzielen. Auf diese Weise lassen sich hydrophobe oder hydrophile Oberflächen erzeugen.

Für den Einsatz in der erfindungsgemäßen Zusammensetzung besonders geeignete feinstteilige mineralische Partikel mit anisotroper Partikelgeometrie sind ferner die in den US-A 5 714 537 und US-A 5 091 461 beschriebenen anorganischen Materialien.

Dabei handelt es sich um Talk" Ton oder ein Material von ähnlichem Typ, der eine Zahlendurchschnittsteilchengröße von ≤ 10 µm und ein Verhältnis von Durchschnittsdurchmesser zu Dicke (D/T) von 4 bis 30 besitzt. Mehrere Sorten von Talk- und Tonfüllstoffmaterialien haben sich als besonders geeignet herausgestellt.

Wie in der US-A 5 091 461. beschrieben, eignen sich insbesondere längliche oder plattenförmige Materialien mit den angegebenen kleinen Teilchen, verglichen mit fibrillenförmigen oder kugelförmigen Füllstoffen. Hoch bevorzugt sind solche Zusammensetzungen, welche Partikel enthalten, die ein Verhältnis Durchschnittsdurchmesser/Dicke (D/T), gemessen nach der in der US-A 5 714 537 beschriebenen Weise von wenigstens 4, bevorzugt wenigstens 6, mehr bevorzugt wenigstens 7, haben. Hinsichtlich des Maximalwertes für das Verhältnis D/T wurde es als wünschenswert gefunden, einen Wert bis zu und einschließlich 30 zu haben, bevorzugt bis zu und einschließlich 24, mehr bevorzugt bis zu und einschließlich 18, noch mehr bevorzugt bis zu und einschließlich 13 und am meisten bevorzugt bis zu und einschließlich 10.

Die mineralischen Partikel können als Pulver, Pasten, Sole Dispersionen oder Suspensionen vorliegen. Durch Ausfällen können aus Dispersionen, Sole oder Suspensionen Pulver erhalten werden.

Die Materialien können nach üblichen Verfahren in die thermoplastischen Formmassen eingearbeitet werden, beispielsweise durch direktes Kneten oder Extrudieren von Formmassen und den feinstteiligen anorganischen Pulvern. Bevorzugte Verfahren stellen die Herstellung eines Masterbatch, z. B. in Flammschutzadditiven und wenigstens einer Komponente der erfindungsgemäßen Formmassen in Monomeren oder Lösungsmitteln, oder die Cofällung von einer thermoplastischen Komponente und den feinstteiligen anorganischen Pulvern, z.B. durch Cofällung einer wässrigen Emulsion und den feinstteiligen anorganischen Pulvern dar, gegebenenfalls in Form von Dispersionen, Suspensionen, Pasten oder Solen der feinstteiligen anorganischen Materialien.

Beispiele für erfindungsgemäß bevorzugt als mineralische Partikel einsetzbare Substanzen sind Tremin® 939-300EST der Quarzwerke GmbH, Frechen, Deutschland (aminosilan-beschichtetes Wollastonit mit einem mittleren Nadeldurchmesser von 3 µm), Finntalc® M30SL der Omya GmbH, Köln, Deutschland (unbeschichteter Talk mit einer Partikelgröße d₅₀ = 8,5 µm) Wicroll® 40PA der Omya GmbH, Köln, Deutschland (silanisierter Wollastonit mit einer Partikelgröße d₅₀ = 1,3 µm) sowie Burgess® 2211 der Omya GmbH, Köln, Deutschland (aminosilan-beschichtetes Aluminiumsilikat mit einer Partikelgröße d₅₀ = 1,3 µm), Naintsch A3 (siehe Beispiele, Komponente C), Nyglos® 4- 10013 (silanisierter Wollastonit mit einer Partikelgröße d₅₀ = 4,8 µm) NYCO Minerals Inc. Willboro, NY, USA)

Die mineralischen Partikel der Komponente C sind in der erfindungsgemäßen Zusammensetzung in einer Menge von 0,1 bis 30 Gew.-Teilen, besonders bevorzugt bis zu 20 Gew.-Teilen und, bevorzugt von 1,5 bis 15 Gew.-Teilen, enthalten sein.

### Komponente D

Als Komponente D) enthalten die Zusammensetzungen erfindungsgemäß teilchenförmige Kohlenverbindungen wie Ruß, der zur Herstellung von Leitfähigkeit geeignet ist und vom Fachmann auch als Leitfähigkeitsruß bezeichnet wird, Graphitpulver, und/oder Kohlenstoffnanofibrillen.

Erfindungsgemäß handelt sich bei Graphitpulvern um zerkleinerten Graphit. Unter Graphit versteht der Fachmann eine Modifikation des Kohlenstoffs wie sie beispielsweise in A.F. Hollemann, E. Wieberg, N. Wieberg, "Lehrbuch der anorganischen Chemie", 91.-100. Aufl., S. 701-702 beschrieben ist. Graphit besteht aus planaren Kohlensioffschichten, die übereinander angeordnet sind.

Graphit kann erfindungsgemäß beispielsweise durch Mahlen zerkleinert werden. Die Partikelgröße liegt im Bereich von bis 0,1 µm - 1 mm, bevorzugt im Bereich von 1 - bis 300 µm, am meisten bevorzugt im Bereich von 2 bis 20 µm.

Bei erfindungsgemäßen Leitfähigkeitsrußen liegt die Primärteilchengröße zwischen 0,005 und 0,2 µm, bevorzugt zwischen 0,01 und 0,1 µm. Die Dibutylphthalat-Adsorption der Leitfähigkeitsruße liegt zwischen 40 und 1000ml pro 100g Ruß, bevorzugt zwischen 90 und 600 ml pro 100g Ruß. Auf der Rußoberfläche können eine Vielzahl von sauerstoffhaltigen Gruppen, wie zum Beispiel Carboxyl-, Lactol-, Phenolgruppen, chinoide Carbonylgruppen und/oder Pyronstrukturen befinden.

Leitfähigkeitsruße können beispielsweise aus Acetylen, aus Synthesegas oder aus dem Furnace-Process aus Öl, Trägergase und Luft hergestellt werden. Herstellungsprozesse sind beispielsweise in R.G. Gilg, "Ruß für leitfähige Kunststoffe" in: Elektrisch leitende Kunststoffe, Hrsg.: H.J. Mair, S. Roth, 2. Aufl., Carl Hanser Verlag, 1989, München, Wien, S. 21- 36 und darin zitierter Literatur beschrieben.

Die Zugabe der erfindungsgemäßen Ruße und/oder Graphite kann vor, während oder nach der Polymerisation der Monomere zum Thermoplasten der Komponente A) erfolgen. Erfolgt die Zugabe der erfindungsgemäßen Ruße und/oder Graphite nach der Polymerisation, so erfolgt sie vorzugsweise durch Zugabe zur Thermoplastenschmelze in einem Extruder oder in einem Kneter. Erfindungsgemäß können die Ruße und/oder Graphite auch als hochkonzentrierte Masterbatche in Thermoplasten, die bevorzugt aus der Gruppe der als Komponente A) eingesetzten Thermoplaste gewählt werden, zudosiert werden. Die Konzentration der Ruße und/oder Graphite in den Masterbatchen liegt im Bereich von 5 bis 70, bevorzugt 8 bis 50, besonders bevorzugt im Bereich von 12 bis 30 Gew.-%, bezogen auf das Masterbatch. Die Ruße und/oder Graphite können zur besseren Dosierbarkeit auch mit Bindemitteln wie beispielsweise Wachsen, Fettsäureestern oder Polyolefinen versetzt sein. Sie können auch mit oder ohne zusätzlichen Bindemitteln beispielsweise durch Press- oder Druckverfahren pelletisiert oder granuliert sein, was ebenfalls der besseren Dosierbarkeit dient.

Erfindungsgemäße Kohlenstoff-Nanofibrillen haben typischerweise die Form von Röhren, die aus Graphit-Schichten gebildet werden. Die Graphitlagen sind in konzentrischer Art um die Zylinderachse angeordnet.

Kohlenstoff-Nanofibrillen haben einen Längen-zu-Durchmesser-Verhältnis von wenigstens 5, vorzugsweise von mindestens 100, besonders bevorzugt von mindestens 1000. Der Durchmesser der Nanofibrillen liegt typischerweise im Bereich von 0,003 bis 0,5 µm, vorzugsweise im Bereich von 0,005 bis 0,08µm, besonders bevorzugt im Bereich von 0,006 bis 0,05 µm. Die Länge der Kohlenstoff-Nanofibrillen beträgt typischerweise 0,5 bis 1000 µm, vorzugsweise 0,8 bis 100 µm, besonders bevorzugt 1 bis 10 µm. Die Kohlenstoff-Nanofibrillen besitzen einen hohlen, zylinderförmigen Kern, um den die Graphitlagen formal gewickelt sind. Dieser Hohlraum hat typischerweise einen Durchmesser von 0,001 bis 0,1 µm, bevorzugt einen Durchmesser von 0,008 bis 0,015 µm. In einer typischen Ausführungsform der Kohlenstoff-Nanofibrillen besteht die Wand der Fibrille um den Hohlraum beispielsweise aus 8 Graphitlagen. Die Kohlenstoff-Nanofibrillen können dabei als Aggregate von bis zu 1000 µm Durchmesser, vorzugsweise bis zu 500 µm Durchmesser aus mehreren Nanofibrillen vorliegen. Die Aggregate können die Form von Vogelnestern, von gekämmtem Garn oder von offenen Netzstrukturen besitzen.

Die Zugabe der Kohlenstoff-Nanofibrillen kann vor, während oder nach der Polymerisation der Monomere zum Thermoplasten der Komponente A) erfolgen. Erfolgt die Zugabe der Kohlenstoff-Nanofibrillen nach der Polymerisation, so erfolgt sie vorzugsweise durch Zugabe zur Thermoplastenschmelze in einem Extruder oder in einem Kneter. Durch den Compoundiervorgang im Kneter oder Extruder können insbesondere die bereits beschriebenen Aggregate weitgehend oder sogar vollständig zerkleinert werden und die Kohlenstoff-Nanofibrillen in der Thermoplastenmatrix dispergiert werden.

In einer bevorzugten Ausführungsform können die Kohlenstoff-Nanofibrillen als hochkonzentrierte Masterbatche in Thermoplasten, die bevorzugt aus der Gruppe der als Komponente A) eingesetzten Thermoplaste gewählt werden, zudosiert werden. Die Konzentration der Kohlenstoff-Nanofibrillen in den Masterbatchen liegt im Bereich von 5 bis 50, bevorzugt 8 bis 30, besonders bevorzugt im Bereich von 12 bis 22 Gew.-%, bezogen auf das Masterbatch. Die Herstellung von Masterbatchen ist beispielsweise in US-A 5,643,502 beschrieben. Durch den Einsatz von Masterbatchen kann insbesondere die Zerkleinerung der Aggregate verbessert werden. Die Kohlenstoffnanofibrillen können bedingt durch die Verarbeitung zur Formmasse bzw. Formkörper in der Formmasse bzw. im Formkörper kürzere Längenverteilungen als ursprünglich eingesetzt aufweisen.

In einer bevorzugten Ausführungsform können auch Mischungen aus den einzelnen Komponenten verwendet werden.

Erfindungsgemäße Leitfähigkeitsruße können beispielsweise unter dem Namen Ketjenblack® von der Fa AKZO Nobel, unter dem Namen Vulcan® von der Fa. Cabot oder unter dem Namen Printex® von der Fa. Degussa bezogen werden.

Erfindungsgemäße Graphite können als Pulver beispielsweise von der Fa. Vogel & Prenner Nachf., Wiesbaden, Deutschland bezogen werden.

Kohlenstoff-Nanofibrillen werden beispielsweise von der Fa. Hyperion Catalysis oder der Fa. Applied Sciences Inc. angeboten. Die Synthese der Kohlenstoff-Nanofibrillen erfolgt beispielsweise in einem Reaktor, der ein Kohlenstoff enthaltendes Gas und einen Metallkatalysator enthält, wie es z.B. in US-A 5,643,502 beschrieben wird.

### Komponente E

Als Verträglichkeitsvermittler gemäß Komponente E) werden vorzugsweise thermoplastische Polymere mit polaren Gruppen eingesetzt.

Erfindungsgemäß kommen Polymere zum Einsatz, die
- E.1: ein vinylaromatisches Monomer,
- E.2: wenigstens ein Monomer ausgewählt aus der Gruppe C₂ bis C₁₂-Alkylmeth- acrylate, C₂ bis C₁₂-Alkylacrylate, Methacrylnitrile und Acrylnitrile und
- E.3: α,β-ungesättigte Komponenten enthaltend Dicarbonsäureanhydride enthalten.

Als vinylaromatische Monomere E.1 ist Styrol besonders bevorzugt, als die Komponente E.2 ist besonders bevorzugt Acrylnitril, als α,β-ungesättigte Komponenten enthaltend Dicarbonsäureanhydride E.3 ist besonders bevorzugt Maleinsäureanhydrid.

Vorzugsweise werden als Komponente E.1, E.2 und E.3 Terpolymere der genannten Monomeren eingesetzt. Dem gemäß kommen vorzugsweise Terpolymere von Styrol, Acrylnitril und Maleinsäureanhydrid zum Einsatz. Diese Terpolymere tragen insbesondere zur Verbesserung der mechanischen Eigenschaften, wie Zugfestigkeit und Reißdehnung bei. Die Menge an Maleinsäureanhydrid in dem Terpolymer kann in weiten Grenzen schwanken. Vorzugsweise beträgt die Menge 0,2 bis 5 mol-%. Besonders bevorzugt sind Mengen zwischen 0,5 und 1,5 mol%. In diesem Bereich werden besonders gute mechanische Eigenschaften bezüglich Zugfestigkeit und Reißdehnung erzielt.

Das Terpolymer kann in an sich bekannter Weise hergestellt werden. Eine geeignete Methode ist das Lösen von Monomerkomponenten des Terpolymers, z.B. des Styrols, Maleinsäureanhydrids oder Acrylnitrils in einem geeigneten Lösemittel, z.B. Methylethylketon (MEK). Zu dieser Lösung werden ein oder gegebenenfalls mehrere chemische Initiatoren hinzugesetzt. Geeignete Initiatoren sind z.B. Peroxide. Sodann wird das Gemisch für mehrere Stunden bei erhöhten Temperaturen polymerisiert. Anschließend werden das Lösemittel und die nicht umgesetzten Monomere in an sich bekannter Weise entfernt.

Das Verhältnis zwischen der Komponente E.1 (vinylaromatisches Monomer) und der Komponente E.2, z.B. dem Acrylnitrilmonomer in dem Terpolymer liegt vorzugsweise zwischen 80:20 und 50:50. Um die Mischbarkeit des Terpolymers mit dem Pfropfcopolymer B zu verbessern, wird vorzugsweise eine Menge an vinylaromatischen Monomer E.1 ausgewählt, die der Menge des Vinylmonomeren B.1 in dem Pfropfcopolymer B entspricht.

Beispiele für erfindungsgemäß einsetzbare Verträglichkeitsvermittler E sind in den EP-A 785 234 und EP-A 202 214 beschrieben. Erfindungsgemäß bevorzugt sind insbesondere die in der EP-A 785 234 genannten Polymere.

Die Verträglichkeitsvermittler können in Komponente E allein oder in beliebiger Mischung untereinander enthalten sein.

Eine weitere, als Verträglichkeitsvermittler besonders bevorzugte Substanz ist ein Terpolymer von Styrol und Acrylnitril im Gewichtsverhältnis 2,1:1 enthaltend 1 mol% Maleinsäureanhydrid.

Die Menge der Komponente E in den erfindungsgemäßen Polymer-Zusammensetzungen liegt vorzugsweise zwischen 0,5 und 30 Gew.-Teilen, insbesondere zwischen 1 und 20 Gew.-Teilen und besonders bevorzugt zwischen 2 und 10 Gew.-Teilen. Höchst bevorzugt sind Mengen zwischen 3 und 7 Gew.-Teilen.

### Komponente F

Die Komponente F umfasst ein oder mehrere thermoplastische Vinyl(Co)Polymerisate.

Geeignete Vinyl(Co)Polymerisate sind Polymerisate von mindestens einem Monomeren aus der Gruppe der Vinylaromaten, Vinylcyanide (ungesättigte Nitrile), (Meth)Acrylsäure-(C₁-C₈)-Allcylester, ungesättigte Carbonsäuren sowie Derivate (wie Anhydride und Imide) ungesättigter Carbonsäuren. Insbesondere geeignet sind (Co)Polymerisate aus
- F.1: 50 bis 99, vorzugsweise 60 bis 80 Gew.-Teilen Vinylaromaten und/oder kernsubstituierten Vinylaromaten (wie Styrol, α-Methylstyrol, p-Methyl- styrol; p-Chlorstyrol) und/oder Methacrylsäure-(C₁-C₈)-Alkylester (wie Methylmethacrylat, Ethylmethacrylat), und
- F.2: 1 bis 50, vorzugsweise 20 bis 40 Gew.-Teilen Vinylcyanide (ungesättigte Nitrile) wie Acrylnitril und Methacrylnitril und/oder (Meth)Acrylsäure- (C₁-C₈)-Alkylester (wie Methylmethacrylat, n-Butylacrylat, tert.-Butyl- acrylat) und/oder Imide ungesättigter Carbonsäuren (z.B. N-Phenylmalein- imid).

Die (Co)Polymerisate F sind harzartig, thermoplastisch und kautschukfrei.

Besonders bevorzugt ist das Copolymerisat aus F.1 Styrol und F.2 Acrylnitril.

Die (Co)Polymerisate F sind bekannt und lassen sich durch radikalische Polymerisation, insbesondere durch Emulsions-, Suspensions-, Lösungs- oder Massepolymerisation herstellen. Die (Co)Polymerisate besitzen vorzugsweise mittlere Molekulargewichte Mw (Gewichtsmittel, ermittelt durch Lichtstreuung oder Sedimentation) zwischen 15.000 und 200.000.

Die Vinyl(Co)Polymerisate können in Komponente F allein oder in beliebiger Mischung untereinander enthalten sein.

Die Komponente F ist in der Polymer-Zusammensetzung vorzugsweise in einer Menge von 0 bis 30 Gew.-Teilen, insbesondere von 0 bis 25 Gew.-Teilen und besonders bevorzugt von 0 bis 20 Gew.-Teilen, insbesondere 0 bis 10 Gew.-Teilen enthalten.

### Komponente G

Die erfindungsgemäßen Polymer-Zusammensetzungen können übliche Additive, wie Flammschutzmittel, Anti-Dripping-Mittel, Gleit- und Entformungsmittel, Nukleierungsmittel, Antistatika, Stabilisatoren, Füll- und Verstärkungsstoffe verschieden von Komponente C sowie Farbstoffe und Pigmente und Hydrophobierungsmittel wie Phenol-Formaldehyd-Harze enthalten.

Die erfindungsgemäßen Zusammensetzungen können im Allgemeinen 0,01 bis 20 Gew.-Teile, bezogen auf die Gesamt-Zusammensetzung, Flammschutzmittel enthalten. Beispielhaft werden als Flammschutzmittel organische Halogenverbindungen wie Decabrombisphenylether, Tetrabrombisphenol, anorganische Halogenverbindungen wie Ammoniumbromid, Stickstoffverbindungen wie Melamin, Melaminformaldehyd-Harze, anorganische Hydroxidverbindungen wie Mg-Al-Hydroxid, anorganische Verbindungen wie Aluminiumoxide, Titandioxide, Antimonoxide, Barium-metaborat, Hydroxoantimonat, Zirkonoxid, Zirkonhydroxid, Molybdänoxid, Ammoniummolybdat, Zinnborat, Ammoniumborat und Zinnoxid sowie Siloxanverbindungen genannt.

Als Flammschutzverbindungen können ferner Phosphorverbindungen, wie sie in der EP-A 363 608, EP-A 345 522 und/oder EP-A 640 655 beschrieben sind, eingesetzt werden.

Als weitere Füll- und Verstärkungsmaterialien kommen solche, die von Komponente C) verschieden sind in Betracht. Geeignet sind beispielsweise Glasfasern, gegebenenfalls geschnitten oder gemahlen, Glasperlen, Glaskugeln, Silicate, Quarz und Titandioxid oder deren Mischungen. Vorzugsweise werden als Verstärkungsmaterial geschnittene oder gemahlene Glasfasern eingesetzt.

Geeignete Hydrophobierungsmittel sind beispielsweise Phenol Formaldehyd-Harze. Sie werden durch Kondensationreaktion aus Phenolen mit Aldehyden, bevorzugt Formaldehyd, durch Derivatisierung der dabei resultierenden Kondensate oder durch Addition von Phenolen an ungesättigten Verbindungen, wie z.B. Acetylen, Terpene etc. hergestellt. Die Kondensation kann dabei sauer oder basisch erfolgen und das Molverhältnis von Aldehyd zu Phenol von 1: 0,4 bis 1 : 2,0 betragen. Hierbei fallen Oligomere bzw. Polymere mit einer Molmasse von 150 - 5000 g/mol an. Bevorzugt enthalten die Formmassen Phenol-Formaldehyd Harze, die im allgemeinen in einer Menge von bis zu 15, vorzugsweise 1 bis 12 und insbesondere 2 bis 8 Gew.-Teilen zugesetzt werden.

Alle Gewichtsteil-Angaben in dieser Anmeldung sind so zu normieren, dass die Summe der Gewichtsteile aller Komponenten gleich 100 gesetzt wird.

Die erfindungsgemäßen Zusammensetzungen werden hergestellt, indem man die jeweiligen Bestandteile in bekannter Weise vermischt und bei Temperaturen von 200°C bis 300°C in üblichen Aggregaten wie Innenknetern, Extrudern und Doppelwellenschnecken schmelzcompoundiert und schmelzextrudiert, wobei das Entformungsmittel in Form einer koagulierten Mischung eingesetzt wird.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Die erfindungsgemäßen Polymer-Zusammensetzungen können zur Herstellung von Formteilen jeder Art verwendet werden. Insbesondere können Formteile durch Spritzguss hergestellt werden. Beispiele für Formteile sind: Gehäuseteile jeder Art, beispielsweise für Haushaltsgeräte wie Elektrorasierapparate, Flatscreens, Monitore, Drucker, Kopierer oder Abdeckplatten für den Bausektor und Teile für den Kfz- und Schienenfahrzeuge. Sie sind außerdem auf dem Gebiet der Elektrotechnik einsetzbar, weil sie sehr gute elektrische Eigenschaften haben.

Weiterhin können die erfindungsgemäßen Polymer-Zusammensetzungen beispielsweise zur Herstellung von folgenden Formteilen verwendet werden:

Innenausbauteile für Schienenfahrzeuge, Schiffe, Busse, andere Kraftfahrzeuge und Luftfahrzeuge, Radkappen, Gehäuse von Kleintransformatoren enthaltenden Elektrogeräten, Gehäuse für Geräte zur Informationsverbreitung und -Übermittlung, Flächige Wandelemente, Gehäuse für Sicherheitseinrichtungen, Heckspoiler und andere Karosserieteile für KFZ, Wärmeisolierte Transportbehältnisse, Vorrichtung zur Haltung oder Versorgung von Kleintieren, Abdeckgitter für Lüfteröffnungen, Formteile für Garten- und Gerätehäuser, Gehäuse für Gartengeräte.

Eine weitere Form der Verarbeitung ist die Herstellung von Formteilen durch Tiefziehen aus vorher hergestellten Platten oder Folien.

Ein weiterer Gegenstand der vorliegenden Erfindung ist daher auch die Verwendung der erfindungsgemäßen Zusammensetzungen zur Herstellung von Formteilen jeglicher Art, vorzugsweise der oben genannten, sowie die Formteile aus den erfindungsgemäßen Zusammensetzungen.

Aufgrund der ausgezeichneten Online-Lackierbarkeit sind die online-lackierten Formteile, vorzugsweise online-lackierte Kfz-Außenteile, beispielsweise Radkästen, Kotflügel, Spiegelaußengehäuse etc., ebenfalls Gegenstand der vorliegenden Erfindung.

Die folgenden Beispiele dienen der weiteren Erläuterung der Erfindung.

### Beispiele

Entsprechend den Angaben der Tabelle 1 werden die Zusammensetzungen hergestellt, zu Prüfkörpern weiterverarbeitet und geprüft.

### Komponente A1

Polyamid 6.6 Ultramid® A 3, BASF, Ludwigshafen/Deutschland).

### Komponente A2

Noryl® GTX 974, General Electric Plastics, Bergen op Zoomen, Niederlande.

### Komponente B

Pfropfpolymerisat von 40 Gew.-Teilen eines Copolymerisats aus Styrol und Acrylnitril im Verhältnis von 73:27 auf 60 Gew.-Teile teilchenförmig vernetzten Polybutadienkautschuk (mittlerer Teilchendurchmesser d₅₀ = 0,28 µm), hergestellt durch Emulsionspolymerisation.

### Komponente C

Naintsch A3 (Naintsch Mineralwerke GmbH, Graz, Österreich) Talk mit einem mittleren Partikeldurchmesser (d₅₀) It. Herstellerangabe von 1,2 µm.

### Komponente D

Ketjenblack® EC 600 (Akzo Nobel, Verkaufsbüro Düren, 52349 Düren, Deutschland) (elektrisch leitfähiger Ruß)

### Komponente E

Terpolymer von Styrol und Acrylnitril mit einem Gewichtsverhältnis von 2,1:1 enthaltend 1 mol-% Maleinsäureanhydrid.

### Komponente F

Styrol/Acrylnitril-Copolymerisat mit einem Styrol/Acrylnitril-Gewichtsverhältnis von 72:28 und einer Grenzviskosität von 0,55 dl/g (Messung in Dimethylformamid bei 20°C).

### Komponente G

### Additive G.1 und G.2 s. Tabelle 1

G.3: Rhenosin® RB (Phenol-Formaldehyd-Harz), Rhein Chemie Rheinau GmbH, Mannheim

### Herstellung und Prüfung der erfindungsgemäßen Formmassen

Das Mischen der Komponenten der Zusammensetzungen erfolgt auf einem 3-1-Innenkneter. Die Formkörper werden auf einer Spritzgießmaschine Typ Arburg 280 E bei 260°C hergestellt.

Die Bestimmung der Wärmeformbeständigkeit HDT erfolgt gemäß ISO R 75.

Die Bestimmung des Ausdehnungskoeffizienten längs (10⁻⁴ x K⁻¹) erfolgt gemäß ASTME 831.

Zur Bestimmung der optischen Schwindungsmessung wird eine 60 x 60 x 2 mm Platte bei einer Massetemperatur von 280°C, einem Druck von 500 bar und einer Werkzeugtemperatur von 80°C gespritzt. Diese Platte wird dann sofort in Längs- und Querrichtung vermessen, anschließend 1 h bei 80°C getempert und dann wieder vermessen. Die Differenz der Längenmessungen wird in % als Längen- bzw. Breitenschwindung angegeben. Dieses Vorgehen wird fünfmal wiederholt und der Mittelwert angegeben.

Die Ergebnisse der einzelnen Tests sind in Tabelle 1 zusammengefasst.

**Tabelle 1**

| **Beispiel/Komponenten** | | **Vergleich 1** | **2** |
|---|---|---|---|
| A1 | Polyamid 6,6 | | 60,09 |
| A2 | Noryl^{®} GTX 974 | 100 | |
| B | Pfropfpolymerisat | | 18,28 |
| C | Talk | | 3,93 |
| D | Ruß | | 3,93 |
| E | Verträglichkeitsvermittler | | 4,71 |
| F | Styrol/Acrylnitril -Copolymer | | 2,59 |
| G1 | Entformungsmittel | | 0,24 |
| G2 | Stabilisatoren | | 1,29 |
| H | Phenol-Formaldehyd Harz | | 4,91 |
| | | | |
| **Eigenschaften** | | | |
| E-Modul | [MPa] | 2200 | 3100 |
| HDTB | [°C] | 167 | 170 |
| Schwindung | [%] | 1,3 | 1,16 |
| Therm. Ausdehnungskoeffizient¹) | 10⁻⁴/K | 0,99/1,00 | 0,88/0,96 |
| Oberfläche | | i.O.²⁾ | i.O |
| Oberflächenwiderstand³⁾ | [S2] | 2,5 E+8 | 3,8 E+7 |
| ¹⁾ längs/quer | | | |
| ²⁾ i.O. = in Ordnung (class A) | | | |
| ³) nach DIN IEC 60 167 | | | |

Sowohl das erfindungsgemäße Beispiel 1 als auch das Vergleichsbeispiel 1 werden in der Qualität des Lackauftrages in einer ESTA (elektrostatischen)-Lackieranlage innerhalb der Fehlergrenzen mit 11 µm als vergleichbar mit Stahl und damit mit i.O. (in Ordnung) beurteilt.

Bei gleicher Qualität der aufgebrachten Lackschicht zeigt die erfindungsgemäße Formmasse ein deutlich höhere Steifigkeit (E-Modul), ein besseres Schwindungsverhalten und einen besseren thermischen Ausdehnungskoeffizienten.

## Patentansprüche

1. Zusammensetzung enthaltend
A) 40 bis 90 Gew.-Teile Polyamid,
B) 0,5 bis 50 Gew.-Teile Pfropfpolymerisat, wobei es sich bei dem Propfpolymerisat um ein oder mehrere Pfropfpolymerisate aus wenigstens einem Vinylmonomeren auf mindestens eine Pfropfgrundlage mit einer Glasübergangstemperatur < 10 °C handelt, wobei die Pfropfgrundlage Polybutadien-Kautschuk ist,
C) 0,1 bis 30 Gew.-Teile mineralische Partikel,
D) 0,1 bis 8 Gew.-Teile elektrisch leitfähige Kohlenstoffpartikel.

2. Zusammensetzung gemäß Anspruch 1, enthaltend mindestens eine weitere Komponente ausgewählt aus der Gruppe der Verträglichkeitsvermittler, Vinyl(co)polymerisate, Polymeradditive und Phenol-Formaldehyd-Harze.

3. Zusammensetzung gemäß Anspruch 1, enthaltend Pfropfpolymerisat von wenigstens einem Monomer ausgewählt aus
B. 1. 1 Styrol, α-Methylstyrol, halogen-oder alkylkensubstituierte Styrole (Meth) Acrylsäure-C1-C8-Alkylester und
B. 1. 2 ungesättigten Nitrilen, (Meth) Acrylsäure-C1-C8-alkylester und Derivaten ungesättigter Carbonsäuren auf
eine Pfropfgrundlage mit einer Glasübergangstemperatur < 10 °C.

4. Zusammensetzung gemäß Anspruch 1, wobei elektrisch leitfähige Kohlenstoffpartikel ausgewählt sind aus mindestens einem aus der Gruppe der Ruße, Graphite und Kohlenstoff-Nanofibrillen.

5. Zusammensetzung gemäß Anspruch 1, wobei mineralische Partikel ausgewählt sind aus mindestens einem aus Talk, Glimmer, Tonschichtmineralien, Montmorrilonit, Kaolin, Vermiculit, Wollastonit.

6. Zusammensetzung gemäß Anspruch 5, enthaltend Talk.

7. Zusammensetzung gemäß Anspruch 1, enthaltend 1 bis 12 Gew.-Teile Phenol-Formaldehyd-Harz.

8. Zusammensetzung gemäß Anspruch 1, enthaltend Copolymerisate aus
E. 1 einem vinylaromatischen Monomer,
E. 2 wenigstens ein Monomer ausgewählt aus der Gruppe C2 bis C12-Alkylmethacrylaten, C2 bis C12-Alkylacrylate, Acrylnitril und Methacrylnitril und
E. 3 wenigstens eine α, β-ungesättigte Komponente enthaltend Dicarbonsäureanhydrid.

9. Verwendung der Zusammensetzung gemäß Anspruch 1, zur Herstellung von Formteilen.

10. Formteile erhältlich aus einer Zusammensetzung gemäß Anspruch 1.

11. Online-lackierte Formteile erhältlich aus einer Zusammensetzung gemäß Anspruch 1.

## Claims

1. Composition containing
A) 40 to 90 parts by weight polyamide,
B) 0.5 to 50 parts by weight graft polymer, containing one or more graft polymers of at least one vinyl monomer on at least one graft basis with a glass-transition temperature of < 10°C, and the graft basis is polybutadiene,
C) 0.1 to 30 parts by weight mineral particles,
D) 0.1 to 8 parts by weight electrically conductive carbon particles.

2. Composition according to claim 1, containing at least one further component selected from the group of compatibilizers, vinyl(co)polymers, polymer additives and phenol-formaldehyde resins.

3. Composition according to claim 1, containing graft polymer of at least one monomer selected from
B.1.1 Styrene, α-methylstyrene, styrenes substituted at the nucleus by halogen or by alkyl, (meth)acrylic acid C₁-C₈ alkylester and
B.1.2 Unsaturated nitriles, (meth)acrylic acid C₁-C₈ alkyl ester and derivatives of unsaturated carboxylic acids on
a graft basis with a glass transition temperature of < 10°C.

4. Composition according to claim 1, wherein electrically conductive carbon particles are selected from at least one of the group of carbon blacks, graphites and carbon nano-fibrils.

5. Composition according to claim 1, wherein mineral particles are selected from at least one of talc, mica, clay bank minerals, montmorillonite, kaoline, vermiculite, wollastonite.

6. Composition according to claim 5, containing talc.

7. Composition according to claim 1, containing 1 to 12 parts by weight phenol formaldehyde resin.

8. Composition according to claim 1, containing copolymers of
E.1 a vinyl aromatic monomer,
E.2 at least one monomer selected from the group C₂ to C₁₂ alkyl methacrylates, C₂ to C₁₂ alkyl acrylates, acrylonitrile and methacrylonitrile and
E.3 at least one α,β unsaturated component containing dicarboxylic acid anhydride.

9. Use of the composition according to claim 1 for the production of moulded parts.

10. Molded parts that can be obtained from a composition according to claim 1.

11. Online-lacquered molded parts that can be obtained from a composition according to claim 1.

## Revendications

1. Composition contenant
A) de 40 à 90 parties en masse de polyamide
B) de 0,5 à 50 parties en masse de polymère greffé, contenant un ou plusieurs polymères greffés constitués d'au moins un monomère vinylique sur au moins une base de greffage avec une température de transition vitreuse < 10°C, et dans laquelle la base de greffage est le polybutadiène,
C) de 0,1 à 30 parties en masse de particule minérale
D) de 0/1 à 8 parties en masse de particule de carbone électroconductrice.

2. Composition selon la revendication 1 contenant au moins un autre constituait choisi dans le groupe constitué des agents de compatibilité, (co)polymères vinyliques, additifs polymères et résines de phénol-formaldéhyde.

3. Composition selon la revendication 1 contenant un polymère greffé d'au moins un monomère choisi parmi
B.1,1 le styrène, l'α-méthylstyréne, des styrènes halogène- ou alkyle-substitués au noyau, un ester alkylique en C₁-C₈ d'acide (méth)acrylique et
B.1.2 des nitriles insaturés, un ester alkylique en C₁-C₈ d'acide (méth)acryllque et des dérivés d'acides carboxyliques insaturés sur
une base de greffage avec une température de transition vitreuse < 10°C.

4. Composition selon la revendication 1, dans laquelle les particules de carbone électroconductrices sont choisies parmi au moins une du groupe constitué des suies, des graphites et des nanofibrilles de carbone.

5. Composition selon la revendication 1, dans laquelle les particules minérales sont choisies parmi au moins une parmi la stéatite, le mica, les matières minérales en couches d'argile, la montmorillonite, le kaolin, la vermiculite, la wollastonique.

6. Composition selon la revendication 5, contenant de la stéatite.

7. Composition selon la revendication 1, contenant de 1 à 12 parties en masse de résine de phénol-formaldéhyde.

8. Composition selon la revendication 1, contenant des copolymères constitués de
E.1 un monomère vinylique aromatique,
E.2 au moins un monomère choisi dans le groupe des méthacrylates d'alkyle en C₂-C₁₂, des acrylates d'alkyle en C₂-C₁₂, de l'acrylonitrile et du méthacrylonitrile, et
E.3 au moins un constituant α,β-insaturé contenant un anhydride d'acide dicarboxylique.

9. Utilisation de la composition selon la revendication 1 pour la préparation de pièces moulées.

10. Pièces moulées obtenues à partir d'une composition selon la revendication 1.

11. Pièces moulées laquées-online obtenues à partir d'une composition selon la revendication 1.
